**Europäisches Patentamt**

**European Patent Office**

**Office européen des brevets**

(19)

(11) Veröffentlichungsnummer: **0 164 652**

**A2**

(12)

# EUROPÄISCHE PATENTANMELDUNG

(21) Anmeldenummer: 85106643.1

(22) Anmeldetag: 30.05.85

(51) Int. Cl.⁴: **H 04 J 15/00**
H 04 B 9/00, H 04 Q 11/00

(30) Priorität: 15.06.84 DE 3422219
16.10.84 DE 3437772
28.02.85 DE 3507066
15.03.85 DE 3509366

(43) Veröffentlichungstag der Anmeldung:
18.12.85 Patentblatt 85/51

(84) Benannte Vertragsstaaten:
AT BE CH DE FR GB IT LI LU NL SE

(71) Anmelder: **Standard Elektrik Lorenz Aktiengesellschaft**
**Lorenzstrasse 10**
**D-7000 Stuttgart 40(DE)**

(72) Erfinder: **Ali, Amar, Dr.**
**Belaustrasse 8**
**D-7000 Stuttgart 1(DE)**

(74) Vertreter: **Kugler, Hermann, Dipl.-Phys. et al,**
**c/o Standard Elektrik Lorenz AG Patent- und**
**Lizenzwesen Postfach 300 929 Kurze Strasse 8**
**D-7000 Stuttgart 30(DE)**

(54) Optisches Nachrichtenübertragungssystem im Teilnehmeranschlussbereich.

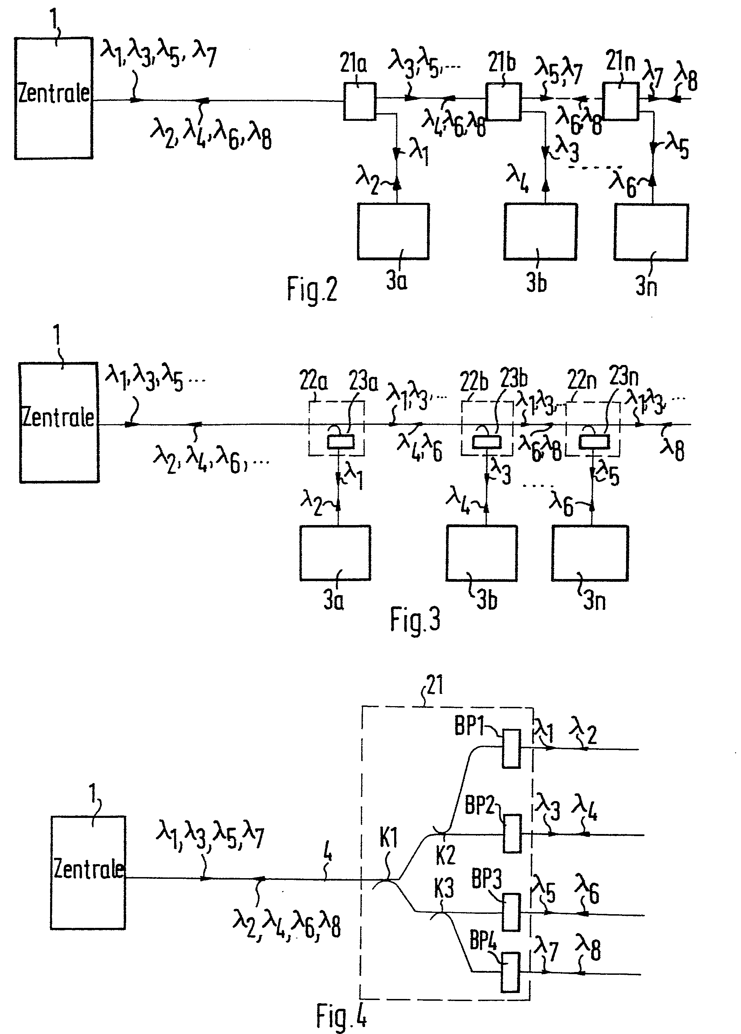

(57) Die Erfindung betrifft ein optisches Nachrichtenüber- tragungssystem zur doppeltgerichteten Übertragung von teilnehmerindividuellen Nachrichten zwischen einer Zentrale und mehreren Teilnehmern, insbesondere den Teilnehmeranschlußbereich eines Breitbandkommunikationssystems. Die Lichtwellenleiter (5a bis 5n) einer Gruppe von räumlich benachbarten Teilnehmern (3a bis 3n) werden in einer Vorfeldeinrichtung (2) über Wellenlängenmultiplexer-demultiplexer an einen gemeinsamen Lichtwellenleiter (4) angekoppelt, der mit der Zentrale (1) verbunden ist und jedem Teilnehmer ist ein eigene Wellenlänge oder ein eigener Bereich von Wellenlängen individuell zugeordnet. Vorzugsweise werden in der Zentrale und in der Vorfeldeinrichtung bidirektionale optisch Wellenlängenmultiplexer-demultiplexer (11,21) verwendet, und die Teilnehmeranschlußleitungen an diese Multiplexer und der Lichtwellenleiter (4) zwischen der Zentral und der Vorfeldeinrichtung werden zur Übertragung in beiden Richtungen verwendet. Durch den Wellenlängenmultiplex-Betrieb auf dem die Zentrale mit der Vorfeldeinrichtung zu verbindenden Lichtwellenleiter (4) und die rein passive optische selektive Vorfeldeinrichtung können die Kosten des Systems niedrig gehalten, die Systemzuverlässigkeit erhöht und die Flexibilität und Erweiterungsfähigkeit gewährleistet werden. Bei zwei Ausführungsbeispielen (Fig. 2, Fig. 3) ist die Vorfeldeinrichtung aus örtlich verteilten teilnehmerindividuellen Einheiten (21a bis 21n, 22a bis 22n) zusammengesetzt.

./...

Fig.1

Optisches Nachrichtenübertragungssystem im
Teilnehmeranschlußbereich

Die Erfindung betrifft ein optisches Nachrichtenübertragungssystem nach dem Oberbegriff des Patentanspruchs 1.

Ein derartiges System ist bekannt aus "Elektrisches Nachrichtenwesen", Band 56, Nr. 4, 1981, S. 379 bis 384, insbesondere aus Bild 2. Die Teilnehmer sind dabei sternförmig an die Zentrale angeschlossen, entweder jeweils über zwei Lichtwellenleiter für die zwei Übertragungsrichtungen wie in Bild 2a) gezeigt, oder über einen einzigen Lichtwellenleiter, über den die teilnehmerindividuellen Nachrichten in beiden Richtungen übertragen werden, wie in Bild 2b) gezeigt.

In Richtung von der Zentrale zum Teilnehmer werden gemäß Bild 2b) zwei Breitbandsignale für zwei Breitband-Empfangseinrichtungen des Teilnehmers im Wellenlängenmulti-

ZT/P1-Kg/R, 14.03.1985

plex übertragen, das Wellenlängenmultiplexsignal in einem beim Teilnehmer befindlichen optischen Koppler in die zwei Breitbandsignale mit unterschiedlichen Wellenlängen aufgeteilt und diese den beiden Breitband-Empfangseinrichtungen über getrennte Lichtwellenleiter zugeführt.

Die Aufteilung des Wellenlängenmultiplex-Signals beim Teilnehmer nach Wellenlängen dient nur dazu, daß die optischen Empfänger (APD-Detektoren) ihr Empfangssignal mit ausreichender Vorselektion erhalten. (Nur einer der beiden optischen Empfänger benötigt hierzu ein optisches Filter). Sie dient nicht dazu, der einen Empfangseinrichtung den Zugriff zum für die andere Empfangseinrichtung bestimmten Signal zu verwehren. Dies ist nicht notwendig bei Empfangsgeräten, die einem einzigen Teilnehmer gehören, dagegen notwendig für Empfangsgeräte verschiedener Teilnehmer. Diese Trennung der teilnehmerindividuellen Signale erfolgt beim bekannten System dadurch, daß die Teilnehmer über individuelle Lichtwellenleiter an die Zentrale angeschlossen sind.

Falls man die verschiedenen Teilnehmer-Endeinrichtungen, die in Bild 2b) gezeigt sind, als mit der Zentrale verbundene "Teilnehmer" betrachtet, so bildet ein solches System kein System der im Oberbegriff des Patentanspruchs 1 bezeichneten Gattung, weil diese "Teilnehmer" entweder nur empfangen oder nur senden und es keine doppeltgerichtete Nachrichtenübertragung zwischen den "Teilnehmern" und der Zentrale gibt.

Aus der DE-OS 32 20 817 ist ein optisches Nachrichtenübertragungssystem bekannt, bei dem eine Gruppe von

ZT/P1-Kg/R, 14.03.1985

Teilnehmern über individuelle Lichtwellenleiter mit
einer diesen Teilnehmern gemeinsamen Vorfeldeinrichtung
verbunden ist, die über einen einzigen Lichtwellenleiter
an eine Zentrale angeschlossen ist.

Bei diesem System werden aber keine teilnehmerindividuellen Signale übertragen, und es gibt auch keine Übertragung in zwei Richtungen. Es wird ein Gemisch aus
mehreren Signalen (Fernsehsignalen) von der Zentrale zur
Vorfeldeinrichtung übertragen, dort mit optischen
Mitteln so verteilt, daß jeder der an die Vorfeldeinrichtung angeschlossenen Teilnehmer dasselbe Gemisch von
Signalen empfängt. Eine Signalübertragung in Rückwärtsrichtung findet nicht statt.

Es ist die Aufgabe der Erfindung, ein System der im
Oberbegriff des Patentanspruchs genannten Art anzugeben,
das kostengünstiger realisierbar ist als das aus der
eingangs genannten Druckschrift bekannte System, das
sternförmigen Verbindungen zwischen den Teilnehmern und
der Zentrale vorsieht.

Die Aufgabe wird wie im Patentanspruch 1 angegeben gelöst. Weiterbildungen ergeben sich aus den Unteransprüchen.

Die Erfindung wird nun anhand der Zeichnungen beispielsweise näher erläutert. Es zeigen:

Fig. 1　ein erstes Ausführungsbeispiel mit bidirek-
　　　　tionalen optischen Multiplexern/-demultiplexern,

Fig. 2    ein zweites und ein drittes Ausführungsbeispiel,
und       bei dem der bidirektionale optische Multi-
Fig. 3    plexer demultiplexer der Vorfeldeinrichtung ört-
          lich in teilnehmerindividuelle Einheiten aufge-
          teilt ist,

Fig. 4    ein viertes Ausführungsbeispiel bei dem die bi-
          direktionale optische Multiplexer/-demultiplexer
          konzentriert aufgebaut ist, und

Fig. 5    ein weiteres Ausführungsbeispiel, bei dem für
          die zwei Übertragungsrichtungen zwei gleich-
          artige Systeme mit eigenen Wellenlängenmulti-
          plexern und Wellenlängendemultiplexern vorge-
          sehen sind.

Fig. 6    eine Prinzipdarstellung einer ein optisches Fil-
          ter enthaltenden Lichtwellenleiter-Koppelanord-
          nung,

Fig. 7    eine andere Ausführungsform der in Fig. 6 gezeigten Kugellinse, und

Fig. 8    eine praktische Ausführungsform der Koppelanord-
          nung nach Fig. 6.

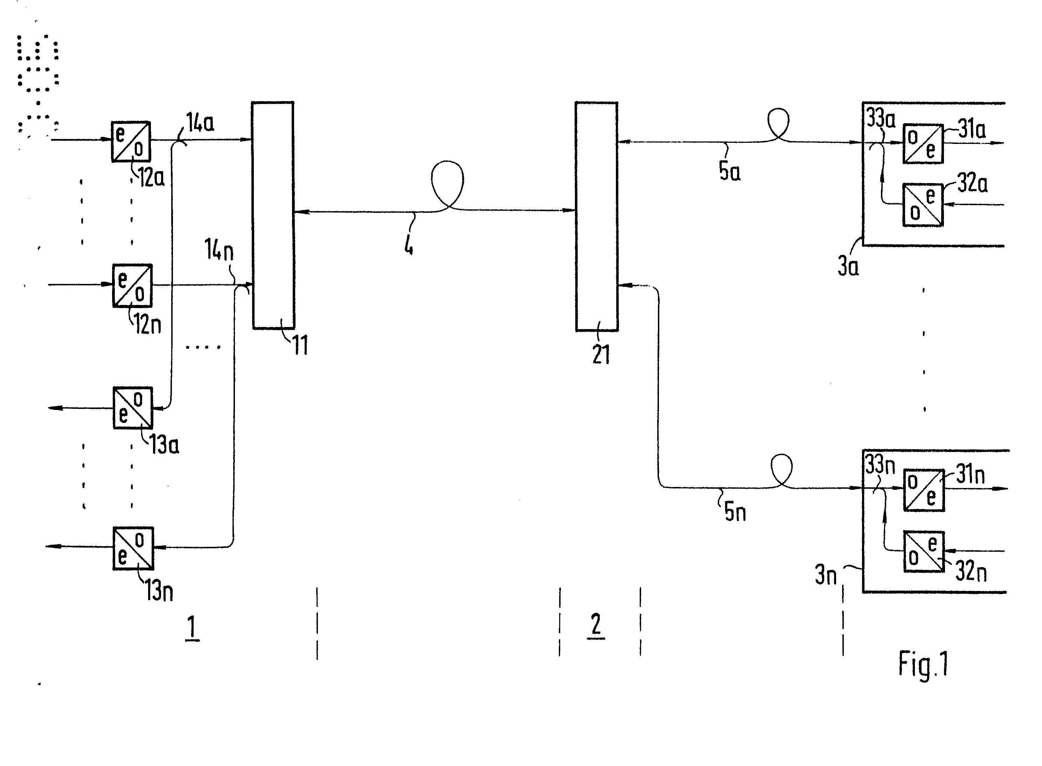

Das in Fig. 1 gezeigte optische Nachrichtenübertragungs
system hat in beiden Übertragungsrichtungen gleichartige
Verbindungen. Es besteht aus einer Zentrale 1, einer
Vorfeldeinrichtung 2, einer Anzahl von Teilnehmern 3a
bis 3n, einem Lichtwellenleiter 4, der die Zentrale 1
mit der Vorfeldeinrichtung 2 verbindet, und mehreren
Lichtwellenleitern 5a bis 5n, durch die die Teilnehmer

ZT/P1-Kg/R, 14.03.1985

3a bis 3n individuell mit der Vorfeldeinrichtung 2 verbunden sind. In der Zentrale 1 ist jedem Teilnehmer 3a bis 3n ein elektrooptischer Umsetzer 12a bis 12n, ein optoelektrischer Umsetzer 13a bis 13n und ein optischer Koppler 14a bis 14n zugeordnet. Statt der gezeigten Faserkoppler (z. B. Verschmelzkoppler, Anschliffkoppler usw.) können auch geeignete optische Filter mit richtungstrennender/richtungskoppelnder Wirkung oder Kombinationen hiervon verwendet werden.

Es sind dort also teilnehmerindividuelle optische Sende- und Empfangseinrichtungen vorhanden, wobei der Ausgang einer optischen Sendeeinrichtung mit dem Eingang einer demselben Teilnehmer zugeordneten Empfangseinrichtung gekoppelt ist.

Die Ausgangswellenlängen $\lambda_1$ bis $\lambda_n$ der einzelnen elektrooptischen Umsetzer 12a bis 12n sind so gewählt, daß sich die einzelnen Wellenlängenbereiche nicht überschneiden und daß sie in einem Bereich liegen, in dem die Lichtwellenleiter 4 und 5a bis 5n eine Übertragung in ausreichender Qualität zulassen. Die Anzahl der an einen Lichtwellenleiter 4 anschließbaren Teilnehmer wird in erster Linie durch die Selektivität der die einzelnen Wellenlängenbereiche trennenden optischen Mittel bestimmt.

Die elektrooptischen Umsetzer 12a bis 12n in der Zentrale 1 sind Laser oder Leuchtdioden (LED). Das Eingangssignal jedes der elektrooptischen Umsetzer 12a bis 12n enthält die für den zugehörigen Teilnehmer 3a bis 3n bestimmte Nachricht, beispielsweise in Form eines pulscodemodulierten elektrischen Zeitmultiplexsignals, das die für eine Bildfernsprechverbindung in einer Richtung zu übertragenden Signale enthält.

ZT/P1-Kg/R, 14.03.1985

Die optischen Ausgangssignale mit den Wellenlängen $\lambda_1$ bis $\lambda_n$ der einzelnen elektrooptischen Umsetzer 12a bis 12n werden über individuelle Lichtwellenleiter in eine optische Einrichtung 11, die für diese Signale als Wellenlängenmultiplexer arbeitet, eingekoppelt und dort zu einem Wellenlängenmultiplex-Signal zusammengefaßt.

Bei dieser optischen Einrichtung 11 handelt es sich um eine Einrichtung, die in umgekehrter Richtung als Wellenlängendemultiplexer arbeitet. Sie ist also in beiden Richtungen gleichermaßen verwendbar und wird als bidirektionaler optischer Wellenlängenmultiplexer/-demultiplexer bezeichnet.

Aufgebaut ist diese Einrichtung z. B. als Faserschmelzkoppler mit in Demultiplexer-Richtung dahinter angeordneten optischen Filtern.

Als Wellenlängenmultiplexer wird jedes optische Mittel bezeichnet, mit dem es möglich ist, mehrere optische Eingangssignale mit verschiedenen Wellenlängen zu einem einzigen optischen Ausgangssignal zusammenzufassen. Umgekehrt wird als Wellenlängendemultiplexer jedes optische Mittel bezeichnet, mit dem ein optisches Eingangssignal, das sich aus verschiedenen Teilsignalen mit unterschiedlichen Wellenlängen zusammensetzt, in diese Teilsignale zerlegt werden kann. Ein Wellenlängendemultiplexer wirkt damit wellenlängenselektiv. Die wellenlängenselektive Wirkung wird beispielsweise durch wellenlängenselektive Richtkoppler oder Beugungsgitter oder durch Filter erreicht, wobei sowohl Interferenzfilter als auch Absorptionsfilter anwendbar sind.

ZT/P1-Kg/R, 14.03.1985

Vorteilhafterweise enthält die Zentrale 1 eine Vielzahl solcher Einrichtungen. Jede solche Einrichtung ist über den zugehörigen Lichtwellenleiter 4 mit einer Vorfeldeinrichtung 2 verbunden, wobei die einzelnen Vorfeldeinrichtungen 2 in der Regel räumlich voneinander getrennt sind.

Die Vorfeldeinrichtung 2 besteht im wesentlichen aus einer optischen Einrichtung 21, die, wie die Fig. 1 zeigt, in gleicher Weise wie die in der Zentrale befindliche optische Einrichtung 11 aufgebaut ist, also aus einem bidirektionalen optischen Wellenlängenmultiplexer/-demultiplexer. Für das von der Zentrale über den Lichtwellenleiter 4 zur Vorfeldeinrichtung 2 gesendete optische Wellenlängenmultiplexsignal arbeitet die optische Einrichtung 21 als Wellenlängendemultiplexer. An ihre Wellenlängendemultiplexer-Ausgänge sind die zu den Teilnehmern 3a bis 3n gehenden Lichtwellenleiter 5a bis 5n angekoppelt, wobei nicht ausgeschlossen wird, daß zwei oder mehr hier als Teilnehmer bezeichnete technische Einrichtungen räumlich nicht getrennt sind und von einem einzigen Betreiber genutzt werden.

Die diesen getrennten technischen Einrichtungen zugeordneten Wellenlängenbereiche können über einen gemeinsamen oder über getrennte Lichtwellenleiter geführt werden.

ZT/P1-Kg/R, 14.03.1985

An jedem Ausgang der Vorfeldeinrichtung 2 ist damit
wieder der gleiche Wellenlängenbereich vorhanden wie am
Ausgang des zugehörigen elektrooptischen Umsetzers 12a
bis 12n. Die optischen Einrichtungen 21 und 11 sind
damit nicht nur sehr einfach aufgebaut, sie enthalten
auch ausschließlich passive Bauelemente. Trotzdem erhält
jeder Teilnehmer nur die für ihn vorgesehene Nachricht.

Die optischen Einrichtungen 11 und 21 sind jeweils so
aufgebaut, daß sie als Wellenlängenmultiplexer und als
Wellenlängendemultiplexer wellenlängenselektiv sind und
daß sie in der einen Richtung als Wellenlängenmultiplexer und in der anderen Richtung als Wellenlängendemultiplexer wirken.

Jeder Teilnehmer 3a bis 3n weist einen optoelektrischen
Umsetzer 31a bis 31n, beispielsweise eine Photodiode,
und einen elektrooptischen Umsetzer 32a bis 32n auf,
dessen optischer Ausgang mittels eines optischen
Kopplers 33a bis 33n oder eines optischen Filters mit
dem teilnehmerseitigen Ende des Lichtwellenleiters 5a
bis 5n und mit dem optischen Eingang des optoelektrischen Umsetzers 31a bis 31n gekoppelt ist.

Das Ausgangssignal eines jeden optoelektrischen Umsetzers 31a bis 31n enthält dieselbe Nachricht wie das
Eingangssignal des zugehörigen elektrooptischen Umsetzers 12a bis 12n in der Zentrale 1. Das Wiedergewinnen der Nachricht erfolgt mit den bekannten Verfahren
der Übertragungstechnik (z. B. Verstärkung, Synchronisation, Entzerrung).

Die Entkopplung zwischen dem Ausgang des elektrooptischen Umsetzers 32a bis 32n und dem Eingang des optoelektrischen Umsetzers 31a bis 31n kann entweder durch Verwendung unterschiedlicher Wellenlängenbereiche oder
durch reflexionsfreien Aufbau der gesamten Anordnung,
insbesondere der optischen Koppler 33a bis 33n oder der
optischen Filter, erfolgen. Entsprechendes gilt für die
Zentrale 1.

Die Art der verwendeten Lichtwellenleiter ist von untergeordneter Bedeutung. Für den Lichtwellenleiter 4
zwischen der Zentrale 1 und der Vorfeldeinrichtung 2
wird eine Monomode-Faser bevorzugt. An die kürzeren
Lichtwellenleiter 5a bis 5n zwischen der Vorfeldeinrichtung 2 und den Teilnehmern 3a bis 3n und zwischen den in
der Zentrale befindlichen teilnehmerindividuellen
Sende- und Empfangseinrichtungen und dem in der Zentrale
befindlichen bidirektionalen optischen Wellenlängenmul-
tiplexer/-demultiplexer 11 werden keine besonderen Anforderungen gestellt. Je nach Bedarf werden hier Monomode-Fasern oder Gradientenfasern bevorzugt.

Fig. 2 zeigt ein System, bei dem der in der Vorfeldeinrichtung befindliche bidirektionale optische Wellen-
längenmultiplexer/-demultiplexer der Vorfeldeinrichtung
anders aufgebaut ist als der in Fig. 1 gezeigte. Die
Einrichtungen in der Zentrale 1 und bei den Teilnehmer
3a bis 3n sind z. B. die in Fig. 1 gezeigten. Zur Richtungstrennng bei den Teilnehmern sind dort wie bei Fig.
1 optische Richtungskoppler verwendet. Diese sind entweder Faserkoppler (z. B. Verschmelzkoppler, Anschliffkoppler usw.) oder geeignete optische Filter mit rich-
tungstrennender/richtungskoppelnder Wirkung oder Kombinationen hiervon.

ZT/P1-Kg/R, 14.03.1985

Der bidirektionale optische Wellenlängenmultiplexer/-demultiplexer 21 nach Fig. 1 ist gemäß Fig. 2 in kleinere Einheiten 21a bis 21n aufgeteilt, die jeweils zu einem Teilnehmer 3a bis 3n gehören und sich in dessen Nähe befinden. Jede dieser Einheiten hat die Funktion eines bidirektionalen optischen Wellenlängenmultiplexers/-demultiplexers, auch wenn sie nur 3 Lichtwellenleiter-Anschlüsse hat, an denen in beiden Übertragungsrichtungen optische Signale übertragbar sind.

In der folgenden Erläuterung des in Fig. 2 gezeigten Systems wird die von der Zentrale wegführende Übertragungsrichtung als Abwärtsrichtung und die zur Zentrale hinführende Übertragungsrichtung als Aufwärtsrichtung bezeichnet.

Die Einheiten 21a bis 21n arbeiten wie folgt: Wenn beispielsweise die Zentrale zu den drei gezeigten Teilnehmern 3a bis 3n ein Wellenlängenmultiplex-Signal mit den teilnehmerindividuellen Wellenlängen $\lambda_1$, $\lambda_3$, $\lambda_5$,... sendet, so koppelt der zum Teilnehmer 3a gehörende bidirektionale optische Wellenlängenmultiplexer/-demultiplexer 21a aus dem Wellenlängenmultiplex-Signal das Teilsignal mit der diesem Teilnehmer zugeordneten Wellenlänge $\lambda_1$ aus und leitet es auf den zu diesem Teilnehmer führenden Lichtwellenleiter. Am anderen in Abwärtsrichtung liegenden Anschluß erscheint das aus den übrigen Teilsignalen mit den Wellenlängen $\lambda_3$ und $\lambda_5$ zusammengesetzte Wellenlängenmultiplex-Signal.

ZT/P1-Kg/R, 14.03.1985

Aus diesem Wellenlängenmultiplex-Signal koppelt der in
Abwärtsrichtung nächste bidirektionale optische Wellenlängenmultiplexer/-demultiplexer 21b das dem zugehörigen
Teilnehmer 3b zugeordnete Teilsignal mit der Wellenlänge $\lambda_3$ aus und gibt das aus den restlichen Teilsignalen zusammengesetzte Wellenlängenmultiplexsignal zur
nächsten Einheit 21n weiter.

Da wie in diesem Beispiel gezeigt, in Abwärtsrichtung
ein Teilsignal nach dem anderen aus dem Wellenlängenmul-
tiplex-Signal ausgekoppelt wird und in dem Wellenlängenmultiplex-Signal, das in derselben Richtung zur jeweils
nächsten Einheit übertragen wird, nicht mehr enthalten
ist, kann in Abwärtsrichtung die Wellenlängenselektivität der Einheiten 21a bis 21n in deren Demulti-
plexer-Funktion von einer Einheit zur folgenden Einheit
jeweils abnehmen, d. h. die optischen Filter können von
einer Einheit zur nächstliegenden immer einfacher aufgebaut sein.

Zur Nachrichtenübertragung in Aufwärtsrichtung, d. h.
von den Teilnehmern 3a bis 3n zur Zentrale werden die
von den Teilnehmern ausgesendeten Signale mit den teilnehmerindividuellen Wellenlängen $\lambda_2$, $\lambda_4$, $\lambda_6$,...
wie folgt zu einem Wellenlängenmultiplex-Signal zusammengesetzt: Jede der Einheiten 21a bis 21n koppelt
das optische Signal, das sie von ihrem zugehörigen Teilnehmer 3a bis 3n empfängt, in das Wellenlängenmultiplex-
signal ein, das sie von der in Abwärtsrichtung nächsten
Einheit empfängt. Bei der in Abwärtsrichtung letzten
Einheit 21n ist am zweiten in Abwärtsrichtung liegenden

A.Ali-H.M.Gündner 2/7/8/10-5

0164652

Anschluß ein nicht gezeigter Teilnehmer direkt angeschlossen, der über einen einzigen Lichtwellenleiter ein optisches Signal mit einer teilnehmerindividuellen Wellenlänge $\lambda_7$ empfängt und sein optisches Signal mit einer teilnehmerindividuellen Wellenlänge $\lambda_8$ zu dieser Einheit 21n sendet.

Zu diesem in Aufwärtsrichtung übertragenen Signal mit der Wellenlänge $\lambda_8$ fügt die Einheit 21n das vom Teilnehmer 3n gesendete optische Signal mit der Wellenlänge $\lambda_6$ hinzu und überträgt ein aus den Teilsignalen mit den Wellenlängen $\lambda_8$ und $\lambda_6$ zusammengesetztes Wellenlängenmultiplex-Signal zur nächsten in Aufwärtsrichtung liegenden Einheit 21b, die wiederum das von ihrem zugehörigen Teilnehmer 3b gesendete Signal mit der Wellenlänge $\lambda_4$ hinzufügt, so daß schließlich aus den von sämtlichen angeschlossenen Teilnehmern gesendeten Teilsignalen ein Wellenlängenmultiplex-Signal gebildet und zur Zentrale übertragen wird.

Jede der Einheiten 21a bis 21n ist z. B. ein Faserschmelzkoppler mit einem optischen Filter, das in Abwärtsrichtung das in Richtung zum Teilnehmer ausgekoppelte Wellenlängenmultiplex-Signal so filtert, daß nur das darin enthaltene optische Signal mit der teilnehmerindividuellen Wellenlänge, z. B. $\lambda_1$, zum Teilnehmer gelangt, und das in Aufwärtsrichtung das vom Teilnehmer gesendete optische Signal mit der teilnehmerindividuellen Wellenlänge, z. B. $\lambda_2$, durchläßt. Ein zweites optisches Filter sorgt dafür, daß das zum Teilnehmer gelangende optische Signal nicht mehr zu den übrigen Teilnehmern weitergesendet wird. Das eine oder andere optische Filter kann entfallen, wenn der Faserschmelzkoppler selbst die beschriebene wellenlängenselektive Wirkung hat.

ZT/P1-Kg/R, 14.03.1985

Im Zusammenhang mit der Fig. 1 ist zum Demulti-plexer-Teil eines als konzentriertes Bauelement aufge-bauten bidirektionalen optischen Wellenlängenmulti-plexers/-demultiplexers angegeben, daß er z. B. ein Faserschmelzkoppler mit dahinter angeordneten optischen Filtern ist.

Die Fig. 4 erläutert diesen Aufbau eines solchen bidi-rektionalen optischen Wellenlängenmultiplexers/-demul-tiplexers 21 für ein Beispiel, bei dem er die Aufgabe hat, in Abwärtsrichtung ein aus vier Signalen mit den Wellenlängen $\lambda_1$, $\lambda_3$, $\lambda_5$, $\lambda_7$ zusammenge-setztes Wellenlängenmultiplex-Signal in diese vier Signale zu zerlegen und in Aufwärtsrichtung vier Signale mit den Wellenlängen $\lambda_2$, $\lambda_4$, $\lambda_6$, $\lambda_8$ zu einem Wellenlängenmultiplex-Signal zusammenzufassen.

Das in Abwärtsrichtung übertragene Wellenlängenmulti-plex-Signal wird mit Hilfe eines Faserschmelzkopplers, der sich stufenweise aus drei jeweils zwei Lichtwellen-leiter miteinander verkoppelnden Faserschmelzkopplern K1 bis K3 zusammensetzt, auf vier Lichtwellenleiter ver-teilt und gelangt so parallel auf vier optische Filter, die jeweils eine der Wellenlängen $\lambda_1$, $\lambda_3$, $\lambda_5$, $\lambda_7$ in Abwärtsrichtung durch-lassen. Die optischen Filter sind Bandpaßfilter und sind mit BP1 bis BP4 bezeichnet.

In Aufwärtsrichtung durchlaufen die vier von den Teil-nehmern gesendeten optischen Signale mit den teil-nehmerindividuellen Wellenlängen $\lambda_2$, $\lambda_4$, $\lambda_6$ und $\lambda_8$ dieselben Bandpaßfilter BP1 bis BP4 und werden dann

ZT/P1-Kg/R, 14.03.1985

mittels des aus den Kopplern K1 bis K3 zusammengesetzten Faserschmelzkopplers zu einem Wellenlängenmultiplex-Signal zusammengefaßt. Somit sind die optischen Bandpaßfilter BP1 bis BP4 den Teilnehmern individuell zugeordnet, und ihr Durchlaßbereich ist den teilnehmerindividuellen Wellenlängen angepaßt (z. B. läßt das Bandpaßfilter BP1 die Wellenlängen $\lambda_1$ und $\lambda_2$ durch).

Dasselbe Prinzip der Verteilung des in Abwärtsrichtung gesendeten Wellenlängenmultiplex-Signals auf teilnehmerindividuelle Bandpaßfilter ist auch bei dem Ausführungsbeispiel nach Fig. 3 verwendet, bei dem der bidirektionale optische Wellenlängenmultiplexer/-demultiplexer der Vorfeldeinrichtung in kleinere Einheiten 22a bis 22n aufgeteilt ist, die jeweils zu einem Teilnehmer 3a bis 3n gehören und sich in dessen Nähe befinden.

Jede dieser Einheiten enthält einen Faserschmelzkoppler und ein optisches Bandpaßfilter 23a bis 23n mit einem teilnehmerindividuellen Durchlaßbereich. Der Faserschmelzkoppler koppelt das in Abwärtsrichtung gesendete Wellenlängenmultiplex-Signal auf das zugehörige Bandpaßfilter, z. B. 23a, das nur die dem Teilnehmer zugeordnete Wellenlänge, z. B. $\lambda_1$, zum Teilnehmer durchläßt. In Aufwärtsrichtung läßt das Band- paßfilter, z. B. 23a, das vom zugehörigen Teilnehmer, z. B. 3a gesendete Signal mit der teilnehmerindividuellen Wellenlänge, z. B. $\lambda_2$, durch, das der zugehörige Faserschmelzkoppler in das von den Teilnehmern zur Zentrale 1 zu sendende Wellenlängenmultiplex-Signal einkoppelt.

ZT/P1-Kg/R, 14.03.1985

Ein wesentlicher Unterschied gegenüber dem Ausführungsbeispiel nach Fig. 2 besteht darin, daß wie in Fig. 3 gezeigt, das in Abwärtsrichtung von einer Einheit zur nächsten Einheit weitergeleitete Wellenlängenmulti-plex-Signal stets dieselben Wellenlängen $\lambda_1$, $\lambda_3$, $\lambda_5$ und $\lambda_7$ enthält, und keine Wellen-längenselektion erfährt. Die für jeden der Teilnehmer 3a bis 3n vorhandenen Einheiten 22a bis 22n unterscheiden sich also nur hinsichtlich des Durchlaßbereiches der in ihnen enthaltenen Bandpaßfilter 23a bis 23n. Im Gegensatz zum Beispiel nach Fig. 2 besteht kein Unterschied hinsichtlich des für die Filterung notwendigen Aufwandes.

Zu Fig. 4 sei noch erwähnt, daß die Koppler K1 bis K3 auch zu einem konzentrierten Faserkoppler zusammengefaßt werden können, so daß die Kopplung in einer einzigen Zone stattfindet.

Der in der Zentrale vorhandene bidirektionale optische Wellenlängen-Multiplexer/-demultiplexer kann entweder als konzentriertes Bauelement, z. B. gemäß der für die Vorfeldeinrichtung in Fig. 4 gezeigten Einrichtung 21, aufgebaut sein, oder in kleinere teilnehmerindividuelle Einheiten aufgeteilt sein, entsprechend den in Fig. 2 oder Fig. 3 für die Vorfeldeinrichtung gezeigten Ein-heiten.

Das System nach Fig. 2 oder Fig. 3 hat den Vorteil, daß es durch Hinzunahme weiterer teilnehmerindividueller Wellenlängen, weiterer bidirektionaler optischer Wellen-längenmultiplexer/-demultiplexer und zugehöriger Teil-nehmereinrichtungen schrittweise entsprechend der teil-nehmerseitigen Nachfrage nach breitbandigen Nachrichten-kanälen ausgebaut werden kann.

ZT/P1-Kg/R, 14.03.1985

Ebenso wie beim System nach Fig. 1 ist durch die in den
Einheiten 21a bis 21n oder 22a bis 22n stattfindende
Selektion der teilnehmerindividuellen Wellenlängen dafür
gesorgt, daß jeder Teilnehmer nur Zugriff zu den für ihn
bestimmten Nachrichten und keinen Zugriff zu den für
andere Teilnehmer bestimmten Nachrichten hat.

Bei den Ausgestaltungen der Erfindung nach den Figuren 1
bis 4 lassen sich beispielsweise folgende Wellenlängenpaare verwenden, wobei davon ausgegangen ist, daß vier
Teilnehmer vorhanden sind und daß billige Laser ohne
Temperaturstabilisierung verwendet werden sollen, die im
Temperaturbereich von $0^o$ bis $60^o$ C eine Wellen-
längentoleranz von $\pm 20nm$ haben.

$$\lambda_1 = 1170 \text{ nm} \qquad \lambda_2 = 1210 \text{ nm}$$
$$\lambda_3 = 1270 \text{ nm} \qquad \lambda_4 = 1310 \text{ nm}$$
$$\lambda_5 = 1470 \text{ nm} \qquad \lambda_6 = 1510 \text{ nm}$$
$$\lambda_7 = 1570 \text{ nm} \qquad \lambda_8 = 1610 \text{ nm}$$

Der Abstand von mindestens 60 nm zwischen benachbarten
Paaren von Wellenlängen ist so gewählt, damit einfache
optische Filter in den bidirektionalen Wellenlängenmul-
tiplexern/-demultiplexern verwendet werden können.

Wie beim System nach Fig. 1 können einem einzigen Teilnehmer auch mehrere Wellenlängen für die Signalübertragung in der einen oder anderen Übertragungsrichtung
zugeordnet werden, und solche Teilnehmer können dann
auch über mehr als einen Lichtwellenleiter an die Vorfeldeinrichtung angeschlossen sein.

ZT/P1-Kg/R, 14.03.1985

Es ist auch möglich, für einen einzigen Teilnehmer dieselbe Wellenlänge oder dieselben Wellenlängen für die
Übertragung in beiden Übertragungsrichtungen über einen
einzigen Lichtwellenleiter zu verwenden, also z. B.
$\lambda_1 = \lambda_2,\ \lambda_3 = \lambda_4.$

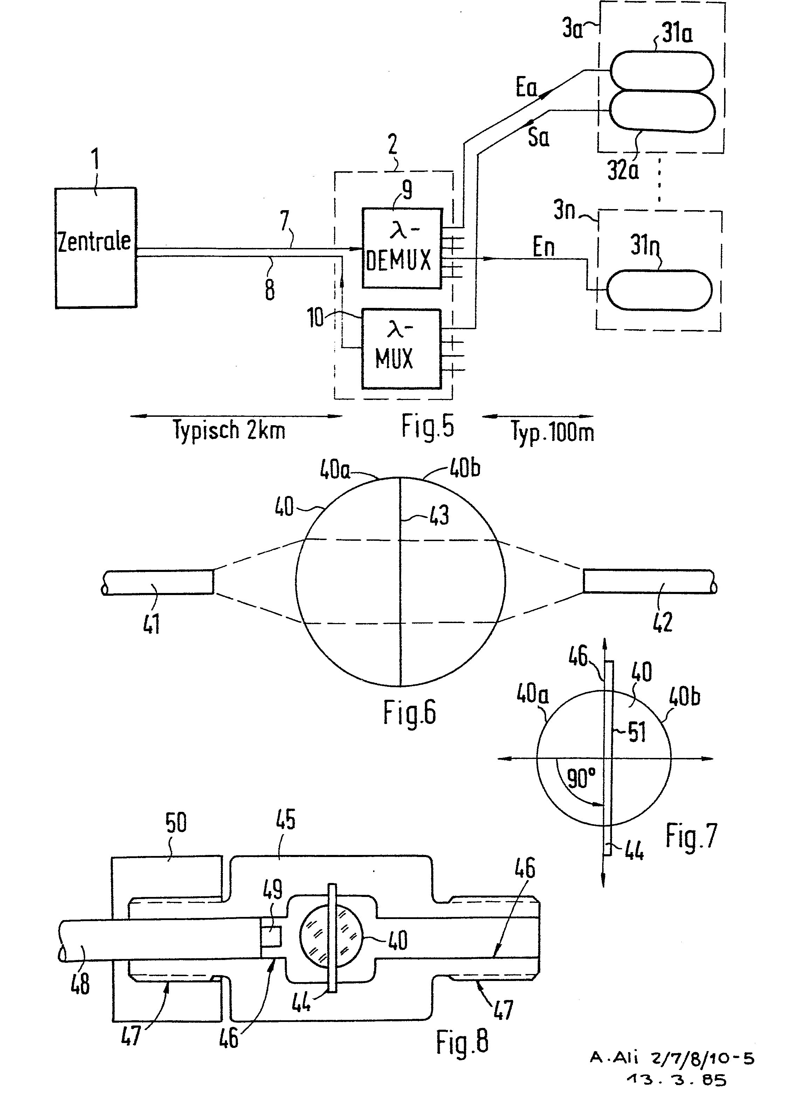

Anhand von Fig. 5 wird noch ein Ausführungsbeispiel der
Erfindung erläutert, bei dem für die beiden Übertragungsrichtungen separate, gleichartige Systeme vorhanden
sind. Von der Zentrale 1 führt ein Lichtwellenleiter 7
zu einem in der Vorfeldeinrichtung 2 befindlichen
Wellenlängendemultiplexer 9. Über diesen Lichtwellenleiter 7 werden optische Signale, vorzugsweise Breitbandsignale, für die an die Vorfeldeinrichtung angeschlossenen Teilnehmer 3a bis 3n im Wellenlängenmultiplex übertragen. Der Wellenlängendemultiplexer 9 verteilt die optischen Signale auf teilnehmerindividuelle
Lichtwellenleiter Ea bis En zu den Teilnehmern
3a bis 3n, von denen nur die Teilnehmer 3a und 3n dargestellt sind. Dort gelangen die optischen Signale mit
den teilnehmerindividuellen Wellenlängen auf optische
Empfänger 31a bis 31n, die sie in elektrische Multiplexsignale umsetzen, die daraufhin in hier nicht interessierender Weise auf die Endgeräte verteilt werden.

Falls ein Teilnehmer ein Signal abzusenden hat, z. B.
der Teilnehmer 3a, so wird dieses Signal in hier nicht
interessierender Weise auf einen optischen Sender 32a
geführt, der es in ein optisches Signal umsetzt und über
einen teilnehmerindividuellen Lichtwellenleiter Sa
zur Vorfeldeinrichtung 2 sendet. In der Vorfeldeinrich-

ZT/P1-Kg/R, 14.03.1985

tung 2 faßt ein Wellenlängenmultiplexer 10 die von den Teilnehmern gesendeten Signale zu einem optischen Wellenlängenmultiplex-Signal zusammen und überträgt dieses über einen Lichtwellenleiter 8 zur Zentrale.

Falls auf einem Lichtwellenleiter entweder in der einen oder in anderen Übertragungsrichtung zwischen der Zentrale 1 und der Vorfeldeinrichtung 2 nicht alle zu übertragenden optischen Signale im Wellenlängenmultiplex übertragbar sind, so können für die Übertragung statt eines auch mehrere Lichtwellenleiter, d. h. eine Kombination aus Wellenlängenmultiplex und Fasermultiplex vorgesehen sein.

Die Entfernung zwischen der Zentrale 1 und der Vorfeldeinrichtung 2 beträgt typischerweise 2km, wogegen die Teilnehmer im Mittel nur ungefähr 100m von der Vorfeldeinrichtung 2 entfernt sind. Es läßt sich zeigen, daß bei der räumlichen Struktur nach Fig. 3 oder Fig. 1 eine geringere Länge von Lichtwellenleitern notwendig ist als bei einem System der eingangs genannten Art, bei dem jeder Teilnehmer sternförmig über jeweils einen Lichtwellenleiter mit der Zentrale verbunden ist. Ein weiterer Vorteil des vorliegenden neuen Übertragungssystems besteht in seiner modularen Ausbaufähigkeit.

Zwar müssen bereits bei der Kabelverlegung sämtliche für den Endausbau maximal notwendigen Lichtwellenleiterverbindungen vorgesehen werden, jedoch kann die Installation der Übertragungseinrichtungen bis zum tatsächlichen Bedarf hinausgezögert werden, so daß zunächst nur geringe Kosten entstehen und der Geräteaufwand problemlos an das jeweils vorhandene Kommunikationsbedürfnis angepaßt werden kann.

ZT/P1-Kg/R, 14.03.1985

**0164652**

Entsprechend der Vorfeldeinrichtung befindet sich in der Zentrale 1 ein der Vorfeldeinrichtung 2 zugeordneter Wellenlängenmultiplexer, der die zu den Teilnehmern zu sendenden optischen Signale mit den teilnehmerindividuellen Wellenlängen zu einem Wellenlängenmultiplex-Signal zusammensetzt und ein separater Wellenlängendemultiplexer, der das Wellenlängenmultiplex-Signal, das er von der Vorfeldeinrichtung empfängt, in die optischen Teilsignale mit den verschiedenen Wellenlängen auflöst.

Die Ausgänge dieses Wellenlängendemultiplexers sind mit den Eingängen der in Fig. 1 gezeigten optoelektrischen Umsetzer 13a bis 13n verbunden. Es ist auch in diesem Falle möglich, für die doppeltgerichtete Übertragung zwischen der Zentrale 1 und der Vorfeldeinrichtung 2 nur einen einzigen Lichtwellenleiter anstelle der in Fig. 3 gezeigten beiden Lichtwellenleiter 7 und 8 zu verwenden. In diesem Falle ist dann sowohl in der Zentrale 1 als auch in der Vorfeldeinrichtung 2 der Eingang des Wellenlängendemultiplexers mit einem einzigen optischen Koppler mit dem Ausgang des Wellenlängenmultiplexers verbunden.

Es wird darauf hingewiesen, daß das in einem optischen Signal mit einer bestimmten Wellenlänge enthaltene Signal ein Zeitmultiplex-Signal sein kann, was im Zusammenhang mit der Erläuterung der Figuren 1 und 5 im vorstehenden bereits erwähnt ist. Dieses Zeitmultiplex-Signal enthält die für verschiedene Empfangseinrichtungen eines Teilnehmers bestimmten Signale bzw. die von verschiedenen Sendeeinrichtungen eines Teilnehmers gesendeten Signale.

ZT/P1-Kg/R, 14.03.1985

In anderen Worten: Ein zwischen der Zentrale und einem
Teilnehmer eingerichteter, durch eine bestimmte Wellenlänge definierter Übertragungskanal enthält im allgemeinen mehrere Zeitmultiplexkanäle. Diese sind unterschiedlichen Endgeräten eines Teilnehmers zugeordnet,
insbesondere für unterschiedlichen Nachrichtendienste
wie z. B. Fernsprecher, Fernseher, Bildfernsprechen,
Datenübertragung.

Dasselbe Prinzip der Zeitmultiplex-Ausnutzung eines
durch eine Wellenlänge bestimmten Übertragungskanals ist
auch anwendbar, wenn ein einziger Teilnehmer mit seinen
Endgeräten die Übertragungskapazität des Übertragungskanals nicht alleine ausnutzen kann. In diesem Falle ist
es möglich, daß mehrere Teilnehmer diesen Übertragungskanal gemeinsam ausnützen, derart, daß die in diesem
Übertragungskanal enthaltenen Zeitmultiplexkanäle verschiedenen Teilnehmern zugeordnet werden.

Terminologisch ist dann die Gemeinschaft solcher Teilnehmer als ein im obigen Sinne verstandener Teilnehmer,
dem eine Wellenlänge individuell zugeordnet ist zu betrachten, d. h. als einer der Teilnehmer 3a bis 3n in
den vorstehenden Ausführungsbeispielen.

Diese Möglichkeit der Vielfachausnutzung eines Übertragungskanals im Zeitmultiplex erscheint besonders
sinnvoll, wenn die Mitglieder der den Übertragungskanal
ausnutzenden Teilnehmergemeinschaft sich in enger Nachbarschaft befinden, z. B. für Teilnehmer, die in einem
Mehrfamilienhaus oder Bürogebäude ihre Wohn- und/oder
Geschäftsräume haben. Der für die Teilnehmergemeinschaft
vorgesehene Demultiplexer zum Auflösen des elektrischen
Zeitmultiplexsignals sorgt dafür, daß jeder Teilnehmer der Teilnehmergemeinschaft nur das für ihn bestimmte Signal empfängt.

Abschließend werden anhand der Figuren 6 bis 8 vorteilhafte Ausgestaltungen der in den Figuren 3 und 4 gezeigten optischen Filter 23a bis 23n bzw. BP1 bis BP4 erläutert.

Diese optischen Filter sind, wie die Figuren 3 und 4 zeigen, jeweils in einen Lichtwellenleiter-Übertragungsweg eingefügt, d. h. sie befinden sich zwischen den Enden von zwei Lichtwellenleitern. Diese sind in Fig. 6 mit den Bezugszeichen 41 und 42 bezeichnet, und sie sind über eine Kugellinse 40 optisch miteinander gekoppelt. Die beiden Lichtwellenleiter 41 und 42 liegen in einer Geraden. Der Mittelpunkt der Kugellinse 1 liegt zwischen den Enden der beiden Lichtwellenleiter auf der Geraden, in der die optischen Achsen der beiden Lichtwellenleiter liegen. Die Enden der Lichtwellenleiter 41 und 42 sind in einem solchen Abstand zur Kugellinse 40 angebracht, daß der Strahlengang, dessen größere Begrenzung gestrichelt dargestellt ist, im Inneren der Kugel parallel verläuft. D. h., die Enden der Lichtwellenleiter 41 und 42, haben jeweils von der Kugellinse einen Abstand, der gleich deren doppelter Brennweite ist. Die Kugellinse 40 ist in zwei Kugelhälften 40a und 40b geteilt. Die Fläche 43 zwischen den beiden Kugelhälften steht senkrecht auf der Geraden, in der die optischen Achsen der beiden Lichtwellenleiter liegen.

Das aus dem Ende des Lichtwellenleiters 41 unter einem von der numerischen Apertur des Lichtwellenleiters abhängigen Winkel austretende Licht fällt auf die Kugelhälfte 40a, verläuft in ihr in parallelen Strahlen,

tritt durch die Fläche 43 hindurch in die Kugelhälfte 40b und wird anschließend auf das Ende des Lichtwellenleiters 42 fokussiert und von diesem weitergeleitet. In umgekehrter Richtung empfängt in entsprechender Weise der Lichtwellenleiter 41 Licht vom Lichtwellenleiter 42.

Die Fläche 43 der Kugellinse 40, d. h. die ebene Fläche der einen oder der anderen oder beider Kugelhälften, ist wellenlängenselektiv, derart, daß sie aus einem Gemisch von optischen Signalen mit verschiedenen Wellenlängen nur ein einziges Signal mit einer bestimmten Wellenlänge durchläßt, beispielsweise das optische Signal mit der Wellenlänge $\lambda_1$ aus einem Gemisch von optischen Signalen mit den Wellenlängen $\lambda_1$, $\lambda_3$, $\lambda_5$ und $\lambda_7$. In umgekehrter Richtung läßt diese Fläche 43 ebenfalls nur ein optisches Signal mit einer bestimmten Wellenlänge hindurch, beispielsweise mit einer Wellenlänge $\lambda_2$, so daß diese Koppelanordnung nach Fig. 6 die Funktion des Bandpaßfilters BP1 in Fig. 4 ausübt.

Damit die Kugellinse 40 in der gezeigten Position innerhalb der optischen Koppelanordnung fixiert werden kann, ist in einem praktischen Ausführungsbeispiel der Kugellinse nach Fig. 7 zwischen den Kugelhälften 40a und 40b eine Trägerplatte 44 vorhanden, die größer als die Kugellinse ist. Mit dem überstehenden Rand der Trägerplatte 44 kann dann die Kugellinse 40 in einem Gehäuse 45 (Fig. 8) gehalten werden.

Die Trägerplatte 44 besteht vorzugsweise aus dem gleichen Material wie die Kugellinse 40. Wie die beiden Koordinatenachsen in Fig. 7 zeigen, ist die Trägerplatte 40 so in die Kugellinse eingefügt, daß ihre eine Fläche 46 mit der ebenen Fläche der Kugelhälfte 40a zusammenfällt, d. h. in der Ebene desjenigen Großkreises liegt, dessen Fläche senkrecht zu den auf einer Geraden liegen-

den optischen Achsen der beiden Lichtwellenleiter 41 und 42 (Fig. 6) steht. Um diese Geometrie zu erreichen, ist die an diese Fläche 46 der Trägerplatte nicht angrenzende Kugelhälfte, in Fig. 3 die Kugelhälfte 40b, um die Dicke der Trägerplatte 44 verkleinert, damit insgesamt, Kugelhälfte 40a plus Trägerplatte 44 plus Kugelhälfte 40b, eine Kugellinse 40 entsteht.

Die Fläche 46 der Trägerplatte 44 ist mit einem solchen Material beschichtet, daß sie die anhand von Fig. 6 für die Fläche 43 beschriebene wellenlängenselektive Wirkung hat. Diese Beschichtung kann aber auch auf der ebenen Fläche der Kugelhälfte 40a, die an diese Fläche 46 der Trägerplatte 44 angrenzt, aufgebracht sein oder auch auf beiden aneinandergrenzenden Flächen oder auf der anderen Fläche 51 der Trägerplatte 44.

In Fig. 8 ist schematisch eine praktische Ausführungsform der Koppelanordnung nach Fig. 6 dargestellt. In einem Gehäuse 45 ist die Trägerplatte 44 befestigt, die die Kugellinse 40 trägt. Die optische Koppelanordnung nach Fig. 8 hat zwei Steckerhülsen 46 mit Steckerflanschen 47 zum Anschluß von zwei Lichtwellenleitern, deren Enden in der Bild- bzw. Objektebene der Kugellinse 40 liegen. In Fig. 8 ist ein Lichtwellenleiter 48, dessen abgemanteltes Ende mit 49 bezeichnet ist, an die optische Koppelanordnung angeschlossen. Von diesem Anschluß ist der Einfachheit halber nur eine Überwurfmutter 50 auf dem Steckerflansch 47 dargestellt. Für den Anschluß der Lichtwellenleiter kann auch jede andere geeignete Anschlußart verwendet werden.

ZT/P1-Kg/R, 14.03.1985

Es wird noch darauf hingewiesen, daß die vorstehend beschriebene optische Koppelanordnung auch bei anderen Anwendungsfällen einsetzbar ist, die eine Filterung eines
optischen Signals im Laufe der Übertragung über einen
Lichtwellenleiter verlangen und daß der bidirektionale
optische Wellenlängenmultiplexer/-demultiplexer mit
einem solchen optischen Filter auch bei anderen optischen Übertragungssystemen als den in den Figuren 1
bis 4 gezeigten einsetzbar ist.

ZT/P1-Kg/R, 14.03.1985

0164652

STANDARD ELEKTRIK LORENZ

AKTIENGESELLSCHAFT

STUTTGART

A.Ali-H.M.Gündner 2/7/8/10-5

Patentansprüche

1. Optisches Nachrichtenübertragungssystem zur doppeltgerichteten Übertragung von teilnehmerindividuellen
Nachrichtensignalen zwischen einer Zentrale und mehreren
Teilnehmern, bei dem die Übertragung der teilnehmerindividuellen Nachrichtensignale zwischen der Zentrale und
einem Teilnehmer entweder in beiden Richtungen über
einen einzigen Lichtwellenleiter oder in jeweils einer
Richtung über verschiedene Lichtwellenleiter erfolgt,
d a d u r c h   g e k e n n z e i c h n e t, daß für
jeweils eine Gruppe von Teilnehmern (3a bis 3n) eine gemeinsame und in ihrer Nähe befindliche Vorfeldeinrichtung (2) vorhanden ist, daß die von der Zentrale (1) zu
der Gruppe von Teilnehmern (3a bis 3n) zu übertragenden
teilnehmerindividuellen Nachrichtensignale zunächst über

ZT/P1-Kg/R, 14.03.1985

einen einzigen Lichtwellenleiter (4) im Wellenlängenmultiplex mit teilnehmerindividuellen Wellenlängen zur
Vorfeldeinrichtung (2) übertragen werden, daß in der
Vorfeldeinrichtung das von der Zentrale empfangene
Wellenlängenmultiplex-Signal mit optischen Mitteln in
einzelne optische Signale mit den teilnehmerindividuellen Wellenlängen aufgeteilt wird, daß diese optischen Signale von der Vorfeldeinrichtung (2) zu den
Teilnehmern (3a bis 3n) über teilnehmerindividuelle
Lichtwellenleiter (5a bis 5n) übertragen werden und
daß die von der Gruppe von Teilnehmern (3a bis 3n) zur
Zentrale (1) zu übertragenden teilnehmerindividuellen
Nachrichtensignale zunächst über teilnehmerindividuelle
Lichtwellenleiter (5a bis 5n) mit teilnehmerindividuellen Wellenlängen zur Vorfeldeinrichtung und von dort
über denselben oder einen zweiten Lichtwellenleiter (4)
im Wellenlängenmultiplex zur Zentrale (1) übertragen
werden.

2. System nach Anspruch 1, dadurch gekennzeichnet, daß
die Wellenlängenmultiplex-Übertragung zwischen der Zentrale (1) und der Vorfeldeinrichtung (2) über einen
einzigen Lichtwellenleiter (4) in zwei Richtungen erfolgt, daß in der Zentrale (1) und in der Vorfeldeinrichtung (2) jeweils ein bidirektionaler optischen
Wellenlängenmultiplexer/-demultiplexer (11, 21) vorhanden ist, daß an den bidirektionalen optischen Wellen-
längenmultiplexer/-demultiplexer (11) der Zentrale (1)
teilnehmerindividuelle in der Zentrale befindliche
Sende- und Empfangseinrichtungen (12a, 13a bis 12n, 13n)
jeweils über einen einzigen in zwei Richtungen betriebenen Lichtwellenleiter angeschlossen sind und daß
an den bidirektionalen optischen Wellenlängenmultiplexer/-Demultiplexer (21) der Vorfeldeinrichtung (2)

ZT/P1-Kg/R, 14.03.1985

über jeweils einen in zwei Richtungen betriebenen Lichtwellenleiter (5a bis 5n) Sende- und Empfangseinrichtungen (31a, 32a bis 31n, 32n) der Teilnehmer
(3a bis 3n) angeschlossen sind (Fig. 1).

3. System nach Anspruch 2, dadurch gekennzeichnet, daß
in der Zentrale (1) und beim Teilnehmer (3a bis 3n) zusammengehörende Sende- und Empfangseinrichtungen (z. B.
12a, 13a; 31a, 32a) jeweils mittels eines optischen
Richtungskopplers (z. B. 14a; 33a) an den zum bidirektionalen optischen Wellenmultiplexer/-demultiplexer
(11; 21) führenden Lichtwellenleiter angeschlossen sind
(Fig. 1).

4. System nach Anspruch 2 oder 3, dadurch gekennzeichnet, daß der bidirektionale optische Wellenlängenmultiplexer (21) der Vorfeldeinrichtung und/oder der (11) der
Zentrale ein Faserschmelzkoppler (K1, K2, K3) mit in
Richtung zu den Teilnehmern dahinter angeordneten optischen Filtern (BP1 bis BP4) ist (Fig. 4).

5. System nach Anspruch 2 oder 3, dadurch gekennzeichnet, daß der bidirektionale optische Wellenlängenmulti-
plexer/-demultiplexer (21) der Vorfeldeinrichtung (2) in
kleinere Einheiten (21a bis 21n; 22a bis 22n) aufgeteilt
ist, die jeweils zu einem Teilnehmer (3a bis 3n) gehören
und sich in dessen Nähe befinden, derart, daß jede zu
einem Teilnehmer (3a) gehörende Einheit (21a, 22a) das
Signal mit der dem Teilnehmer zugeordneten Wellenlänge
($\lambda_1$) aus dem von der Zentrale gesendeten Wellenlängen-
multiplex-Signal ($\lambda_1, \lambda_3, \lambda_5...$) auskoppelt und
das vom zugehörigen Teilnehmer (3a) zur Zentrale zu sendende optische Signal mit der dem Teilnehmer zugeordneten

Wellenlänge $(\lambda_2)$ in das von den Teilnehmern
(3a bis 3n) zur Zentrale (1) zu sendende Wellenlängen-
multiplex-Signal ($\lambda_4$, $\lambda_6$,...) einkoppelt (Fig. 2,
Fig. 3).

6. System nach Anspruch 5, dadurch gekennzeichnet, daß
jede der einzelnen Einheiten (21a bis 21n, 22a bis 22n)
des bidirektionalen optischen Wellenlängenmulti-
plexers/-demultiplexers ein Faserschmelzkoppler mit mindestens einem in Richtung zu den Teilnehmern dahinter
angeordneten optischen Filter (23a bis 23n) ist (Fig. 3).

7. System nach Anspruch 5 oder 6, dadurch gekennzeichnet, daß der bidirektionale optische Wellenlängenmulti-
plexer/-demultiplexer der Zentrale (1) in entsprechender
Weise wie der der Vorfeldeinrichtung aufgebaut ist.

8. System nach Anspruch 2, dadurch gekennzeichnet, daß
die Wellenlängenmultiplex-Übertragung zwischen der Zentrale und der Vorfeldeinrichtung über einen einzigen
Lichtwellenleiter in zwei Richtungen erfolgt und daß jeweils der Ausgang eines Wellenlängenmultiplexers und der
Eingang eines Wellenlängendemultiplexers über Richtungskoppler mit diesem Lichtwellenleiter verbunden sind.

9. System nach einem der vorstehenden Ansprüche, dadurch gekennzeichnet, daß einem Teilnehmer mehrere
Wellenlängen zugeordnet sind.

10. System nach einem der vorstehenden Ansprüche, dadurch gekennzeichnet, daß für einen Teilnehmer in beiden
Übertragungsrichtungen dieselbe Wellenlänge oder dieselben Wellenlängen verwendet sind.

ZT/P1-Kg/R, 14.03.1985

11. System nach einem der vorstehenden Ansprüche, dadurch gekennzeichnet, daß ein durch eine Wellenlänge definierter Übertragungskanal mehrere Zeitmultiplex-Kanäle enthält, die entweder unterschiedlichen Endgeräten eines einzigen Teilnehmers oder unterschiedlichen Mitgliedern einer Teilnehmer-Gemeinschaft zugeordnet sind.

12. System nach Anspruch 4 oder 6, dadurch gekennzeichnet, daß jedes der optischen Filter (BP1 bis BP4, 23a bis 23n) ein Teil einer optischen Koppelanordnung (40) ist, die zwei in einer Geraden liegende Lichtwellenleiter (41, 42) miteinander koppelt, daß die optische Koppelanordnung (40) aus zwei zu einer Kugellinse (40) zusammengefügten Kugelhälften (40a, 40b) und dazwischen angeordneten wellenlängenselektiven Mitteln (43, 44) besteht, daß der Mittelpunkt der Kugellinse zwischen den Enden der Lichtwellenleiter (41, 42) auf deren optischen Achsen angeordnet ist und daß die ebene Fläche (43) einer Kugelhälfte (40a) senkrecht auf den optischen Achsen der Lichtwellenleiter (41, 42) steht.

13. System nach Anspruch 12, dadurch gekennzeichnet, daß die wellenlängenselektiven Mittel eine wellenlängenselektiv ausgebildete ebene Fläche (43) einer Kugelhälfte oder die wellenlängenselektiv ausgebildeten ebenen Flächen beider Kugelhälften sind (Fig. 6).

14. System nach Anspruch 13, dadurch gekennzeichnet, daß zwischen den beiden Kugelhälften eine Trägerplatte angeordnet ist.

ZT/P1-Kg/R, 14.03.1985

15. System nach Anspruch 12, dadurch gekennzeichnet, daß als wellenlängenselektives Mittel eine Trägerplatte (44) aus dem gleichen Material wie die Kugellinse (40) vorhanden ist, die derart zwischen den Kugelhälften (40a, 40b) angeordnet ist, daß ihre eine Fläche (46) mit der ebenen Fläche der einen Kugelhälfte (40a) zusammenfällt und daß diese Fläche (46) der Trägerplatte und/oder ihre andere Fläche (51) wellenlängenselektiv ist.

ZT/P1-Kg/R, 14.03.1985

0164652

Fig.1

Fig.2

Fig.3

Fig.4

A. Ali 2/7/8/10-5
13.3.85

Fig.5

Typisch 2km    Typ.100m

Fig.6

Fig.7

Fig.8

A. Ali 2/7/8/10-5
13.3.85